# EUROPÄISCHE PATENTANMELDUNG

(11) **EP 4 592 570 A1**
(43) Veröffentlichungstag der Anmeldung: **30.07.2025**
(21) Anmeldenummer: 25000004.9
(22) Anmeldetag: 23.01.2025
(51) Int. Cl.: F16K 17/196, F16K 17/30, H01M 50/317, H01M 50/333, F16K 1/44

(54) **DRUCKAUSGLEICHSELEMENT FÜR BEHÄLTER, VORZUGSWEISE FÜR BATTERIEGEHÄUSE VON FAHRZEUGEN**

(30) Priorität: 24.01.2024 DE 102024000289
(71) Anmelder: KACO GmbH + Co. KG, 74912 Kirchardt (DE)
(72) Erfinder: Schulz, Bernd, 74360 Ilsfeld (DE); Scheuler, Corina, 74912 Kirchardt (DE); Wagner, Peter, 71640 Ludwigsburg (DE); Lamparter, Eugen, 74831 Gundelsheim (DE)
(74) Vertreter: Patentanwälte Jackisch-Kohl und Kohl

(57) **Zusammenfassung**

Das Druckausgleichselement ist für Behälter, vorzugsweise für Batteriegehäuse von Fahrzeugen, vorgesehen. Es weist ein Gehäuse (1,13) mit wenigstens einem Einlass (26) und wenigstens einem Auslass (17) für ein gasförmiges Medium, vorzugsweise Luft, auf. Ferner hat es ein Ventilelement (34), das im Strömungsweg des gasförmigen Mediums vom Einlass (26) zum Auslass (17) liegt. Damit das Druckausgleichselement bei einfacher konstruktiver Gestaltung einen zuverlässigen Druckausgleich und eine zuverlässige Notentlüftung im Gefahrenfalle ermöglicht, ist im Strömungsweg des gasförmigen Mediums vom Einlass (26) zum Auslass (17) ein zweites Ventilelement (37) vorgesehen. Beide Ventilelemente (34, 37) sind gegeneinander mit unterschiedlicher Kraft druckbelastet, wobei die Drucckräfte so vorgesehen sind, dass zumindest das eine Ventilelement in eine Belüftungsstellung und zumindest das andere Ventilelement in eine Entlüftungsstellung verstellbar sind.

## Beschreibung

Die Erfindung betrifft ein Druckausgleichselement für Behälter, vorzugsweise für Batteriegehäuse von Fahrzeugen, nach dem Oberbegriff des Anspruches 1.

Um die zumindest teilweise als Antriebsenergiespeicher genutzte Batterie eines Elektrofahrzeuges vor Umwelteinflüssen zu schützen, werden eine Mehrzahl von Einzelzellen der Batterie in ein Gehäuse bzw. einen Behälter eingebaut. In der Wandung des Gehäuses befindet sich wenigstens ein 19Druckausgleichselement, um einen Druckausgleich zwischen dem Umgebungsdruck und dem Innendruck des Behälters zu ermöglichen.

Die bekannten Druckausgleichselemente sind darüber hinaus so ausgebildet, dass mit ihnen nicht nur ein Druckausgleich, sondern auch eine Notentlüftung des Behälters möglich ist, mit dem innerhalb des Behälters aufgrund einer Fehlfunktion auftretender hoher Druck rasch abgebaut werden kann. Solche Druckausgleichselemente sind allerdings konstruktiv aufwändig ausgebildet und erfordern einen hohen Fertigungs-, Montage- und Prüfaufwand.

Der Erfindung liegt die Aufgabe zugrunde, das gattungsgemäße Druckausgleichselement so auszubilden, dass es bei einfacher konstruktiver Gestaltung einen zuverlässigen Druckausgleich und eine zuverlässige Notentlüftung im Gefahrenfalle ermöglicht.

Diese Aufgabe wird beim gattungsgemäßen Druckausgleichselement erfindungsgemäß mit den kennzeichnenden Merkmalen des Anspruches 1 gelöst.

Das erfindungsgemäße Druckausgleichselement weist zwei Ventilelemente auf, die sich im Strömungsweg des gasförmigen Mediums vom Einlass zum Auslass und umgekehrt befinden. Beide Ventilelemente sind gegeneinander druckbelastet.

Dabei sind die beiden Ventilelemente unterschiedlich stark belastet, um unterschiedliche Funktionen des Druckausgleichselementes zu ermöglichen. So können die Ventilelemente so verstellt werden, dass sie eine Belüftung und eine Entlüftung des Behälterinneren ermöglichen. Eine Belüftung des Behälters erfolgt dann, wenn der Umgebungsdruck höher ist als der Druck im Behälterinneren. Die eine Druckkraft ist hierbei so eingestellt, dass das entsprechende Ventilelement verschoben werden kann, wenn der Außendruck größer ist als der Behälterinnendruck. Dann wird das entsprechende Ventilelement so verstellt, dass der Behälterinnenraum belüftet werden kann.

In der Entlüftungsstellung wird der Behälterinnenraum entlüftet, wenn der Druck im Behälterinnenraum größer ist als der Umgebungsdruck. In diesem Falle wird das entsprechende Ventilelement gegen die Druckkraft verstellt, so dass das gasförmige Medium aus dem Behälterinneren nach außen durch den Auslass in den Umgebungsbereich strömen kann.

Die beiden Ventilelemente ermöglichen hinsichtlich der unterschiedlichen Funktionen des Druckausgleichselementes nur einen geringen Einbauraum, so dass das Druckausgleichselement raumsparend ausgebildet werden kann.

Vorteilhaft wird die Druckkraft für die beiden Ventilelemente durch jeweils wenigstens eine Druckfeder erzeugt. Mit ihr lässt sich die Druckkraft gezielt auf das jeweilige Ventilelement einstellen, so dass bei Erreichen der vorgegebenen Druckkraftwerte die Belüftungs- bzw. Entlüftungsfunktion zuverlässig ausgelöst werden kann. Optional kann die Druckkraft erzeugende Druckfeder mit einem Magneten kombiniert werden, wodurch sich Bauraumvorteile erzielen lassen. Alternativ kann auch die Druckkraft erzeugende Druckfeder ganz durch einen Magneten ersetzt werden.

Die beiden Ventilelemente sind vorteilhaft verschiebbar in einem Führungsteil untergebracht, so dass sie sicher in die jeweilige Position für die Belüftung oder Entlüftung verschoben werden können.

Zu einer besonders einfachen und auch kompakten Gestaltung trägt vorteilhaft bei, wenn das Gehäuse durch einen Deckel und einen Träger gebildet wird. Diese Gestaltung ermöglicht eine einfache Montage und Fertigung des Druckausgleichselementes.

Der Deckel des Gehäuses ist vorteilhaft mit dem Führungsteil für die beiden Verbindungselemente versehen.

Das Druckausgleichselement ist in bevorzugter Weise so ausgebildet, dass sich der Führungsteil durch den Träger erstreckt. Dann können in den Führungsteil bei der Montage die Ventilelemente zunächst eingesetzt und anschließend der Deckel mit dem Führungsteil und den darin montierten Ventilelementen durch den Träger gesteckt werden.

Damit der Deckel und der Träger sicher miteinander verbunden werden, ist der Deckel so gestaltet, dass er durch eine Zugkraft gegen den Träger gezogen wird. Die Zugkraft ist so hoch, dass der Deckel im normalen Einsatz des Druckausgleichselementes nicht vom Träger abheben kann. Dies ist nur dann möglich, wenn im Behälterinnenraum ein unerwünscht hoher Druckanstieg erfolgen sollte, beispielsweise aufgrund einer thermischen Fehlfunktion in Verbindung mit einer Entgasung zumindest einer Batteriezelle. Dann wird der Deckel gegen die Zugkraft vom Träger abgehoben, so dass der Überdruck im Behälter augenblicklich abgebaut werden kann.

Zur Erzielung dieser Druckkraft wird in vorteilhafter Weise wenigstens eine Druckfeder eingesetzt, die sich an der vom Deckel abgewandten Seite am Führungsteil und am Träger axial abstützt. Mit der Druckfeder wird somit der Deckel über den Führungsteil fest gegen den Träger gezogen. Optional kann die Druckkraft erzeugende Druckfeder mit einem Magneten kombiniert werden wodurch sich Bauraumvorteile erzielen lassen. Alternativ kann auch die Druckkraft erzeugende Druckfeder ganz durch einen Magneten ersetzt werden.

Damit eine einwandfreie Abdichtung zwischen dem Träger und dem Deckel sichergestellt ist, liegt der Deckel unter Zwischenlage wenigstens einer Dichtung, vorzugsweise eines Dichtringes, dichtend am Träger an. Die Dichtung kann am Deckel und/oder am Träger vorgesehen sein. Die Dichtung wird in der Einbaulage durch die Zugkraft der Druckfeder ausreichend elastisch verformt, so dass eine einwandfreie Abdichtung sichergestellt ist. Optional kann ein Magnet die Druckfeder ergänzen, insbesondere kann die Dichtung magnetisch wirksam sein und mit der Druckfeder kombiniert werden. Alternativ kann auch die Druckraft erzeugende Druckfeder ganz durch die magnetisch wirksame Dichtung ersetzt werden, wodurch sich Bauraumvorteile erzielen lassen.

Zu einer kompakten und konstruktiv einfachen Ausbildung trägt in vorteilhafter Weise bei, wenn die beiden Ventilelemente koaxial zueinander angeordnet sind. In diesem Falle lassen sich die beiden Ventilelemente am Druckausgleichselement raumsparend montieren. Wenn die Ventilelemente im Führungsteil des Deckels untergebracht sind, lassen sich die Ventilelemente sehr einfach durch einen Steckvorgang montieren.

Vorteilhaft liegen die Druckfedern, mit denen die beiden Ventilelemente gegensinnig belastet sind, gleichachsig zueinander, wodurch sich eine besonders kompakte Bauform ergibt.

Hierzu trägt in besonderem Maße bei, wenn die Druckfedern vorteilhaft koaxial zueinander angeordnet sind. Dann befinden sich die Druckfedern auf kleinstem Raum innerhalb des Druckausgleichselementes.

Hierbei ist vorteilhaft vorgesehen, dass die Druckfeder für den Deckel die Druckfedern für die beiden Ventilelemente mit Abstand umgibt. Dadurch ergibt sich eine verschachtelte Bauform, die zur kompakten und konstruktiv einfachen Ausbildung des Druckausgleichselementes beiträgt.

In der Entlüftungsstellung haben die beiden Ventilelemente einen solchen axialen Abstand voneinander, dass ein Durchlass für das gasförmige Medium vom Inneren des Behälters in die Umgebung geschaffen wird. Das entsprechende Ventilelement wird hierbei gegen die auf ihn wirkende Drucckraft verschoben.

In der Belüftungsstellung wird das entsprechend andere Ventilelement, das dem Behälter zugeordnet ist, entgegen der auf ihn wirkenden Druckkraft gegen einen Anschlag verschoben. Dann wird ein Zugang geschaffen, damit das gasförmige Medium von der Umgebung in den Behälter gelangen kann.

Bei einer weiteren konstruktiven Vereinfachung sind die beiden Ventilelemente durch einen einstückigen Doppelkolben gebildet. Er wird auf beiden Seiten jeweils durch eine Druckfeder belastet. Dabei sind die Druckfedern so ausgebildet, dass der Doppelkolben zunächst eine Ausgangsstellung einnimmt, aus der er für die Belüftung bzw. Entlüftung des Behälters entsprechend verschoben werden kann. Bei diesem Verschiebevorgang wird die jeweils ihn in der Verschieberichtung belastende Feder unter dem Druck des gasförmigen Mediums zusammengedrückt.

Für die **Notfallentlüftung** ist der Träger mit wenigstens einem Durchlass versehen, über den der Druck des gasförmigen Mediums im Behälter unmittelbar auf den Deckel des Gehäuses wirkt.

Bei Überschreiten eines vorgegebenen Druckes im Behälter wird der Deckel gegen die Kraft der ihn belastenden Druckfeder vom Träger abgehoben. Dabei wird ein Auslass freigegeben, der durch den Abstand zwischen dem Träger und dem Deckel bestimmt ist. Dieser Auslass hat einen großen Öffnungsquerschnitt, so dass der Überdruck im Behälter rasch abgebaut werden kann.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: in perspektivischer Darstellung eine erste Ausführungsform eines erfindungsgemäßen Druckausgleichselementes in einer Ausgangsstellung.
- Fig. 2: einen Halbschnitt durch das Druckausgleichselement gemäß Fig. 1,
- Fig. 3: einen Axialschnitt durch das Druckausgleichselement gemäß Fig. 1,
- Fig. 4 bis Fig. 6: in Darstellungen entsprechend den Fig. 1 bis 3 das Druckausgleichselement in einer Belüftungsstellung,
- Fig. 7 bis Fig. 9: in Darstellungen entsprechend den Fig. 1 bis 3 das Druckausgleichselement in einer Entlüftungsstellung,
- Fig. 10 bis Fig. 12: in Darstellungen entsprechend den Fig. 1 bis 3 das Druckausgleichselement in einer Notentlüftungsstellung,
- Fig. 13 bis Fig. 15: in Darstellungen entsprechend den Fig. 1 bis 3 eine **zweite** Ausführungsform eines erfindungsgemäßen Druckausgleichselementes in einer Ausgangsstellung,
- Fig. 16 bis Fig. 18: in Darstellungen entsprechend den Fig. 1 bis 3 das Druckausgleichselement gemäß den Fig. 12 bis 15 in einer Belüftungsstellung,
- Fig. 19 bis Fig. 21: in Darstellungen entsprechend den Fig. 13 bis 15 das Druckausgleichselement in einer Entlüftungsstellung,
- Fig. 22 bis Fig. 24: in Darstellungen entsprechend den Fig. 13 bis 15 das Druckausgleichselement in einer Notentlüftungsstellung.

Das Druckausgleichselement wird bei Behältern, wie Batteriegehäusen, eingesetzt und dient dazu, einen Druckausgleich zwischen dem Behälterinneren und der Umgebung herzustellen.

Die allermeisten Batterien für elektrische Antriebe von Kraftwagen und somit auch die Batteriegehäuse werden heutzutage im Unterflurbereich der Fahrgastzelle verbaut. Das Batteriegehäuse nimmt eine Mehrzahl von miteinander verschalteten Batteriezellen welche in einer Lage beziehungsweise Ebene angeordnet sind auf.

Die im Folgenden beschriebenen Druckausgleichselemente, insbesondere für ein wie oben beschriebenes Batteriegehäuse, erfüllen vier Funktionen. In einer Ausgangsstellung ist kein Ausgleich zwischen dem Behälterinneren und der Umgebung vorgesehen.

In einer Belüftungsstellung ist ein Druckausgleich zwischen dem Behälterinneren und der Umgebung gewährleistet.

In einer Entlüftungsstellung ist ein Entlüften des Behälters möglich.

Schließlich ermöglicht das Druckausgleichselement in einer Notentlüftungsstellung einen raschen Abbau eines im Behälter auftretenden zu hohen Druckes einhergehend mit einer starken Gasbildung und punktuell hohen Temperaturen und rechtzeitig eine gerichtete Entlüftung zu erfüllen und ein Explodieren der Batterie zu verhindern.

Das Druckausgleichselement erfüllt somit als einzige Baueinheit sämtliche vier Funktionen. Dabei ist das Druckausgleichselement einfach ausgebildet, trotzdem günstig in der Herstellung und zuverlässig hinsichtlich seiner verschiedenen Funktionen.

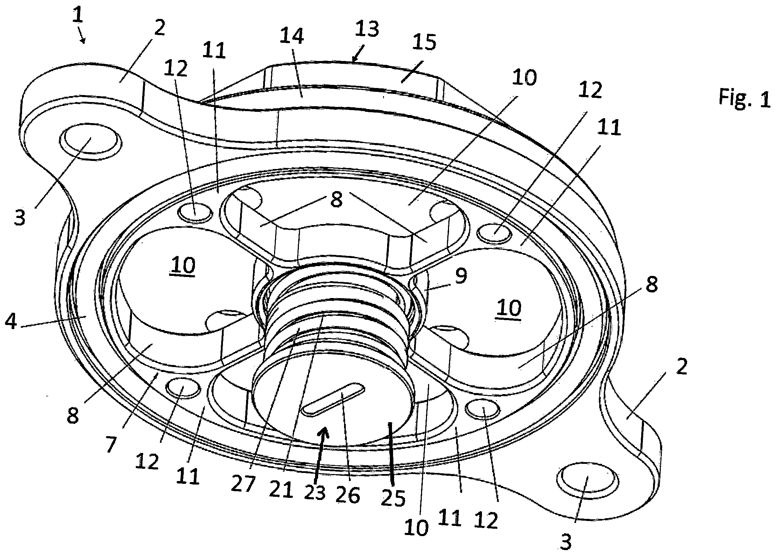

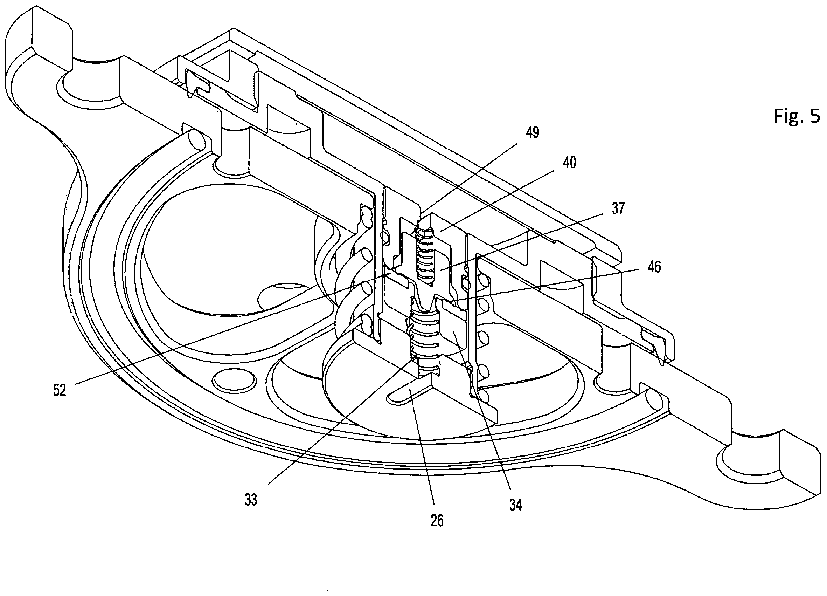

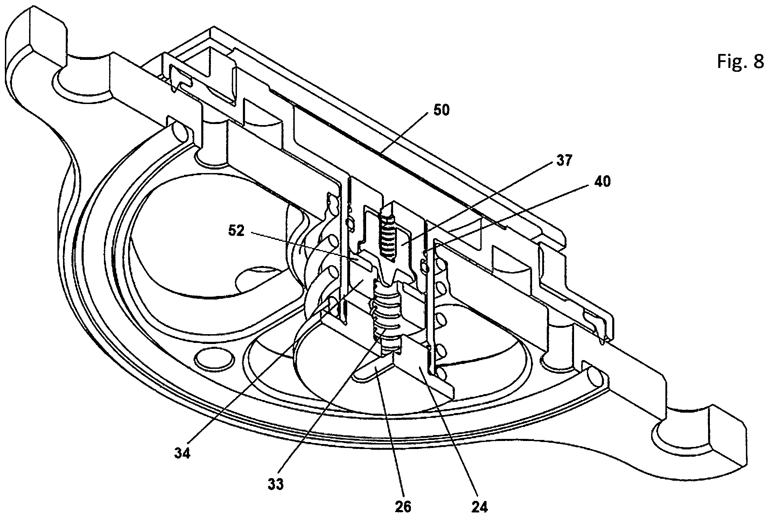

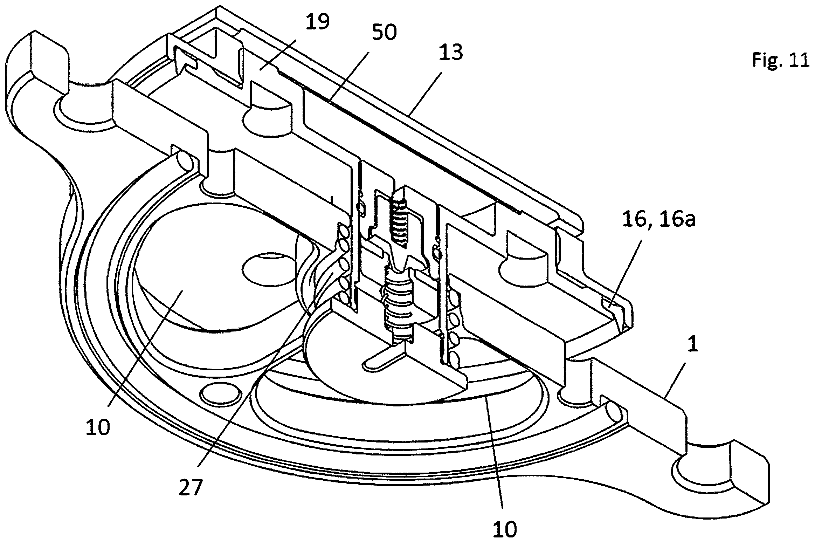

Das Druckausgleichselement gemäß den Fig. 1 bis 12 ist so ausgebildet, dass es axial abdichtet.

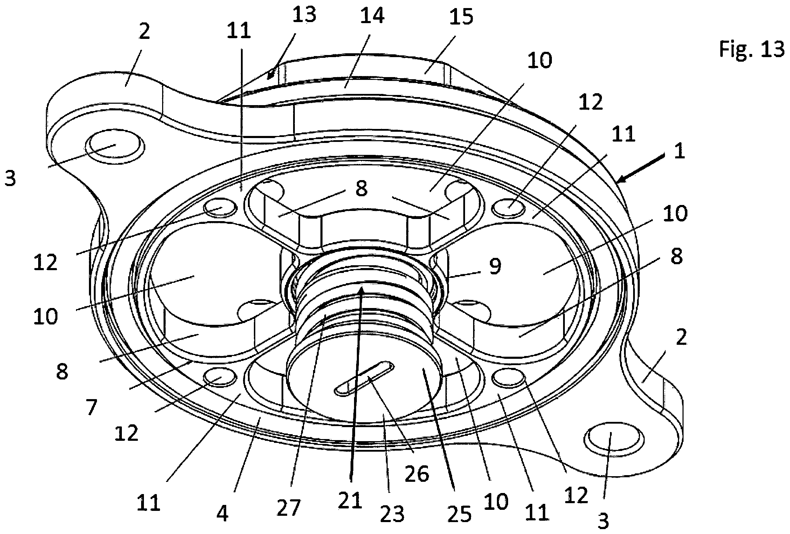

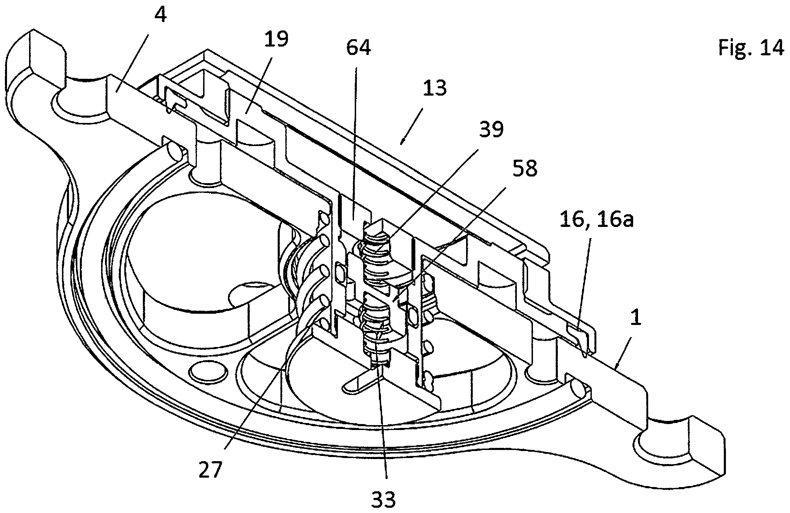

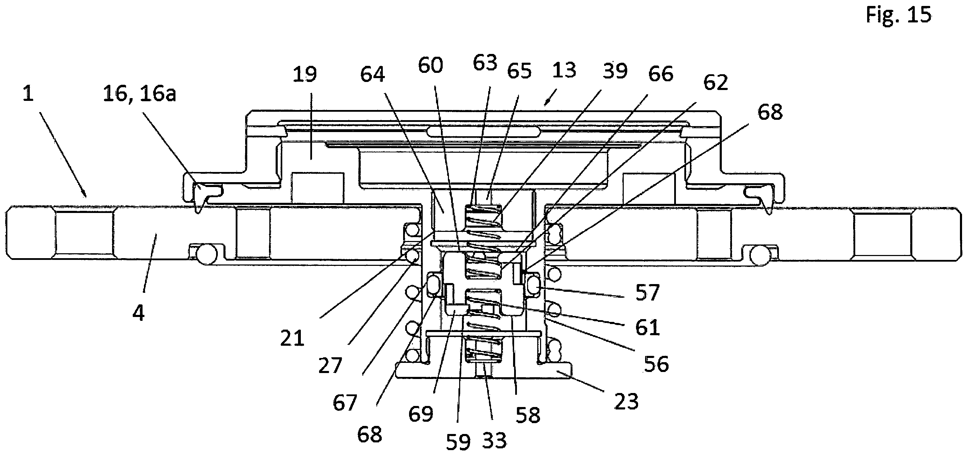

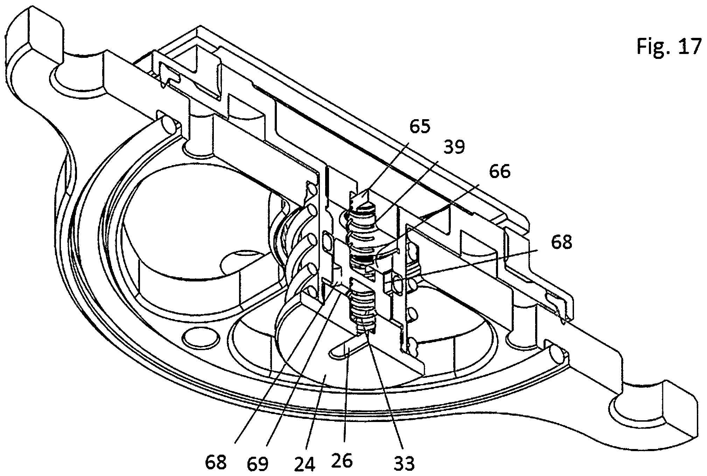

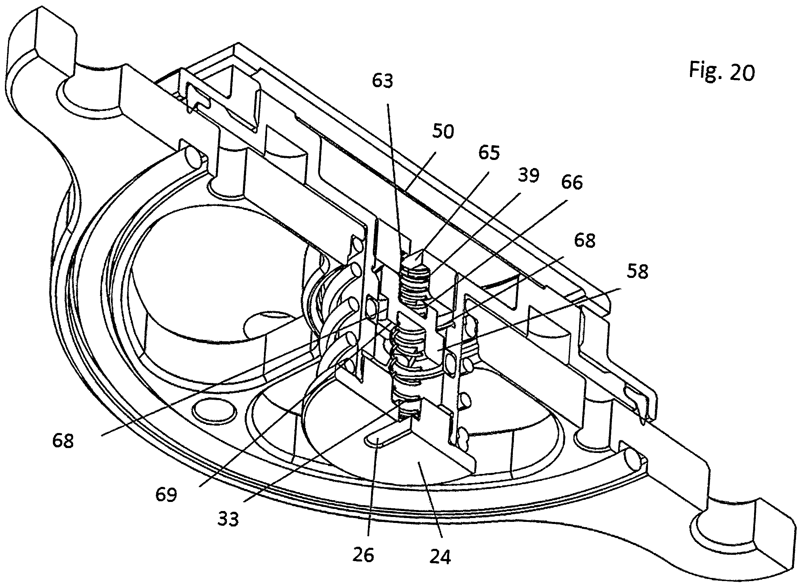

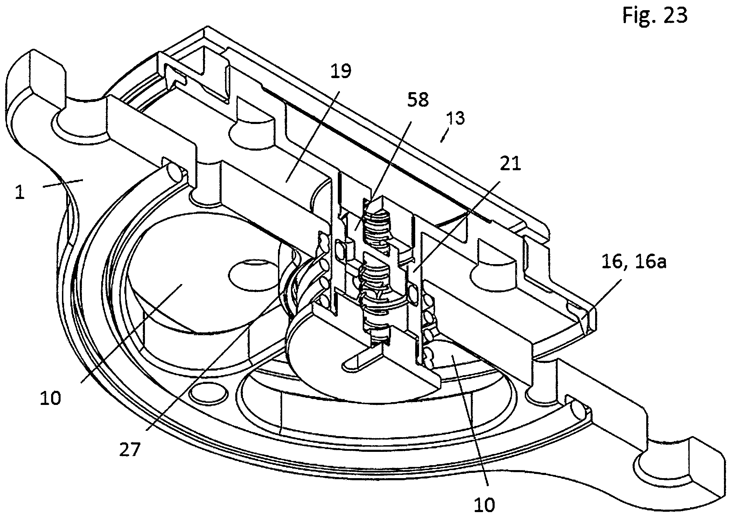

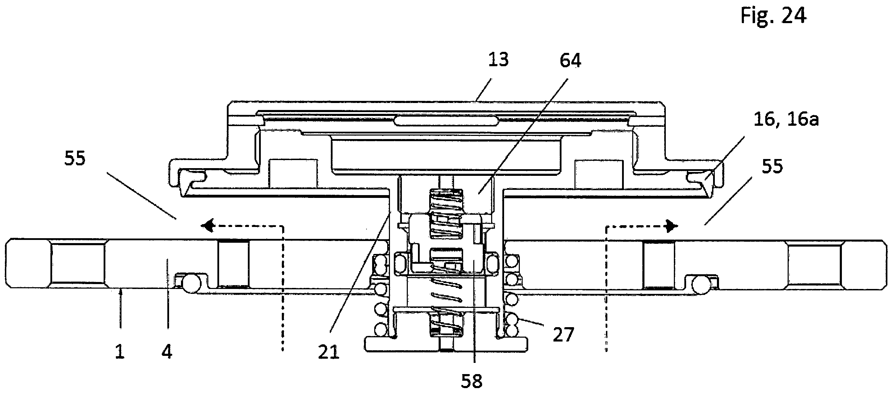

Beim Druckausgleichselement gemäß den Fig. 13 bis 24 erfolgt die Abdichtung radial.

Das Druckausgleichselement wird in einen (nicht dargestellten) Behälter einer Batterie eines Elektrofahrzeuges eingebaut. Im Behälter sind mehrere Module in bekannter Weise untergebracht, wobei jedes Batteriemodul aus mehreren Batteriezellen bestehen kann. Der Batteriebehälter besteht vorteilhaft aus Metall und hat wenigstens eine Einbauöffnung, in die das Druckausgleichselement eingesetzt wird. Es sitzt abgedichtet in dieser Einbauöffnung und kann für einen Druckausgleich zwischen dem Druck im Inneren des Behälters und der Umgebung sorgen.

Der Behälter weist außer den erwähnten Batteriemodulen noch weitere Komponenten auf, die an sich bekannt sind und beispielsweise Komponenten für das Management der Batteriemodule umfassen.

Der Behälter kann jede geeignete Ausbildung haben. Je nach Größe des Behälters kann er mehr als nur ein Druckausgleichselement aufweisen. Die Einbauöffnung des Batteriebehälters kann an jeder geeigneten Seite des Gehäuses vorgesehen sein.

Das Druckausgleichselement hat einen scheibenförmigen Träger 1 mit nach außen abstehenden Augen 2, die jeweils mit einer Durchtrittsöffnung 3 versehen sind. Die Augen 2 sind beispielhaft diametral einander gegenüberliegend angeordnet und dienen zur Befestigung des Druckausgleichselementes am Batteriebehälter. Durch die Durchtrittsöffnungen 3 werden Schrauben gesteckt, mit denen der Träger 1 an der Außenseite einer der Wände des Batteriebehälters anliegend befestigt wird.

Der Träger 1 hat einen ringförmigen Grundkörper 4, der an seiner dem Batteriebehälter zugewandten Unterseite eine Ringnut 5 aufweist, die eine Ringdichtung 6 aufnimmt, die vorteilhaft durch einen elastischen Formring, insbesondere O-Ring, gebildet ist.

Mit ihm erfolgt die Abdichtung des Druckausgleichselementes gegenüber der Gehäusewand, an welcher das Druckausgleichselement befestigt ist.

Innerhalb des Grundkörpers 4 befindet sich eine Verstrebung 7, die beispielhaft vier etwa rechtwinklig zueinander liegende Arme 8 aufweist, deren radial innere Enden an einen Ring 9 anschließen.

Die Arme 8 begrenzen zusammen mit dem Ring 9 und dem ringförmigen Grundkörper 4 Öffnungen 10, die über den Umfang des Grundkörpers 4 verteilt angeordnet sind. Die Arme 8 sind hochkant angeordnet, so dass sich ihre Längsseiten in Axialrichtung des Druckausgleichselementes erstrecken.

Im Übergangsbereich 11 von den Armen 8 zum ringförmigen Grundkörper 4 befinden sich weitere Öffnungen 12, die den Übergangsbereich 11 durchsetzen und vorteilhat kreisförmigen Querschnitt haben. Die Öffnungen 12 sind wesentlich kleiner als die Öffnungen 10.

Der Träger 1 mit dem Grundkörper 4 und der Verstrebung 7 mit den Armen 8 und dem Ring 9 ist vorteilhaft einstückig ausgebildet. Der Träger 1 kann aus einem metallischen Werkstoff, aber auch aus einem entsprechend harten Kunststoff bestehen. Vorzugsweise kommen zur Herstellung der einzelnen Komponenten bereits übliche Herstellungsverfahren, wie 2K-Spritzguss, direkte Anspritzung von Metall und Kunststoff unter Verwendung von Tiefziehteilen oder Stranggussprofilen, zum Einsatz.

Das Druckausgleichselement hat einen Deckel 13, der in der Ausgangsstellung des Druckausgleichselementes abgedichtet auf dem Grundkörper 4 des Trägers 1 aufliegt. Der Deckel 13 hat einen Ringflansch 14, der von einem zylindrischen Mantel 15 radial nach außen absteht. Der freie Rand des Ringflansches 14 ist in Richtung auf den Grundkörper 4 des Trägers 1 abgewinkelt und dient als radiale Begrenzung für einen Dichtring 16, der mit einer Dichtlippe 16a in der Ausgangsstellung dichtend auf dem Grundkörper 4 aufliegt. In dieser Dichtstellung hat der abgewinkelte Rand des Ringflansches 14 Abstand vom Grundkörper 4, so dass eine zuverlässige Abdichtung zwischen dem Deckel 13 und dem Träger 1 erreicht wird. Der Deckel 13 und der Träger 1 bilden ein Gehäuse des Druckausgleichselementes.

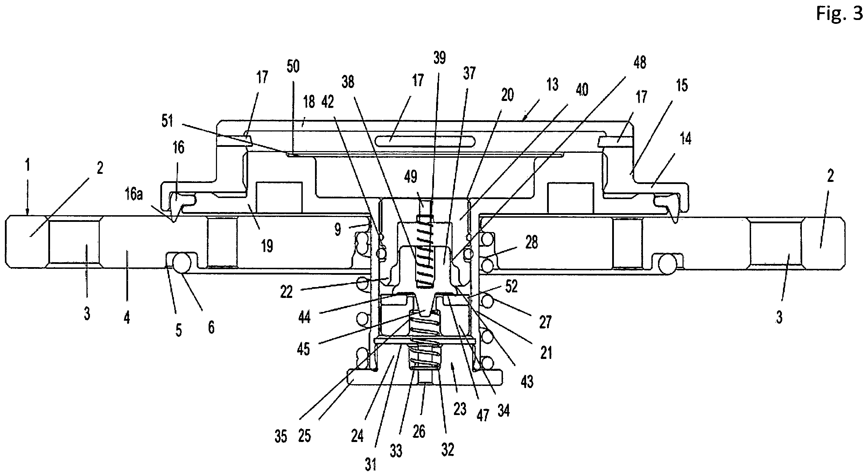

Der Mantel 15 ist mit Auslassöffnungen 17 versehen, die über den Umfang des Mantels 15 vorteilhaft gleichmäßig verteilt angeordnet sind. Die Auslassöffnungen 17 haben beispielhaft rechteckigen Umriss (s. a Fig. 3) und erstrecken sich in Umfangsrichtung des Mantels 15.

Die Auslassöffnungen 17 befinden sich mit nur geringem Abstand unterhalb eines scheibenförmigen Abschlussteiles 18, dessen äußerer Rand vorteilhaft fluchtend zum äußeren Rand des Mantels 15 verläuft.

Der Deckel 13 mit dem Ringflansch 14, dem Mantel 15 und dem Abschlussteil 18 ist vorteilhaft einstückig ausgebildet. Der Deckel 13 kann aus dem gleichen Material bestehen wie der Träger 1.

Der Dichtring 16 ist am äußeren Rand eines Halteteiles 19 befestigt, der sich mit seinem äußeren Rand bis unterhalb des Ringflansches 14 erstreckt und auf dem der Dichtring 16 befestigt ist. Der Halteteil 19 erstreckt sich über den Umfang des Mantels 15 bzw. des Ringflansches 14 und weist zentral eine Öffnung 20 auf, von deren Rand ein in Richtung auf den Grundkörper 4 sich erstreckender zylindrischer Führungsteil 21 absteht. Er ragt durch den Ring 9 des Trägers 1. Der Führungsteil 21 ist vorteilhaft einstückig mit dem Halteteil 19 ausgebildet.

Das in den **Fig. 1 bis 3** untere Ende des zylindrischen Führungsteiles 21 ist durch ein Verschlusselement 23 verschlossen. Es ragt mit einem Verschlussteil 24 in den Führungsteil 21 und ist in geeigneter Weise an der Innenwand des Führungsteiles 21 befestigt. Mit einem radial nach außen verlaufenden Ringflansch 25 liegt das Verschlusselement 23 dichtend an der freien Stirnseite des Führungsteiles 21 an. Der Verschlussteil 24 wird von wenigstens einer Öffnung 26 durchsetzt, die im Ausführungsbeispiel länglich ausgebildet ist und in einer Axialebene des Verschlussteiles 24 liegt.

Der Führungsteil 21 ist von wenigstens einer Druckfeder 27 umgeben, die vorteilhaft eine Schraubendruckfeder ist. Sie stützt sich mit einem Ende am Ringflansch 25 des Verschlusselementes 23 ab und ragt mit ihrem anderen Ende in eine Ringnut 28, die im Ring 9 des Trägers 1 vorgesehen ist. Die Ringnut 28 ist in Richtung auf den Ringflansch 25 des Verschlusselementes 23 offen. Die Druckfeder 27 stützt sich an einem Boden 30 der Ringnut 28 axial ab.

In der Einbaulage erzeugt die Druckfeder 27 über den Verschlussteil 24 und den Führungsteil 21 eine Zugkraft auf den Deckel 13, dessen Dichtring 16 unter dieser Druckkraft unter elastischen Verformung dichtend am ringförmigen Grundkörper 4 anliegt. Mit der Druckfeder 27 lässt sich stufenlos diese Axialkraft, mit welcher der Deckel 13 auf dem Träger 1 aufliegt, an den vorgesehenen Einsatzfall des Druckausgleichselementes anpassen. Beispielsweise entspricht die Axialkraft einem Äquivalent des Innendruckes zwischen 40 mbar bis 500 mbar.

Der Verschlussteil 24 ist an seiner dem Deckel 13 zugewandten Stirnseite 31 mit einer zentralen Vertiefung 32 versehen, in deren Boden die Öffnung 26 mündet. Sie bildet zusammen mit der Vertiefung 32 einen das Verschlusselement 23 axial durchsetzenden Durchlass. In die Vertiefung 32 greift eine weitere Druckfeder 33 ein, die vorteilhaft als Schraubendruckfeder ausgebildet ist. Sie stützt sich am Boden der Vertiefung 32 ab und wirkt axial auf einen ein Ventilelement bildenden Entlüftungskolben 34, der im Führungsteil 21 angeordnet ist und relativ zum Führungsteil 21 axial verschiebbar ist. Der Entlüftungskolben 34 wird innerhalb des Führungsteiles 21 durch dessen Wandung geführt.

Der Entlüftungskolben 34 hat eine zentrale Öffnung 35, die ihn axial durchsetzt und die an ihrer Innenwand eine Ringschulter 36 aufweist, an der das dem Deckel 13 zugewandte Ende der Druckfeder 33 axial abgestützt ist.

An der dem Deckel 13 zugewandten Seite liegt am Entlüftungskolben 34 ein Ventilelement bildender Belüftungskolben 37 unter Federkraft an.

Er ist auf seiner dem Deckel 13 zugewandten Seite mit einer mittigen Vertiefung 38 versehen, in die wenigstens eine Druckfeder 39, vorzugsweise eine Schraubendruckfeder, eingreift. Sie belastet den Belüftungskolben 37 in Richtung auf den Entlüftungskolben 34.

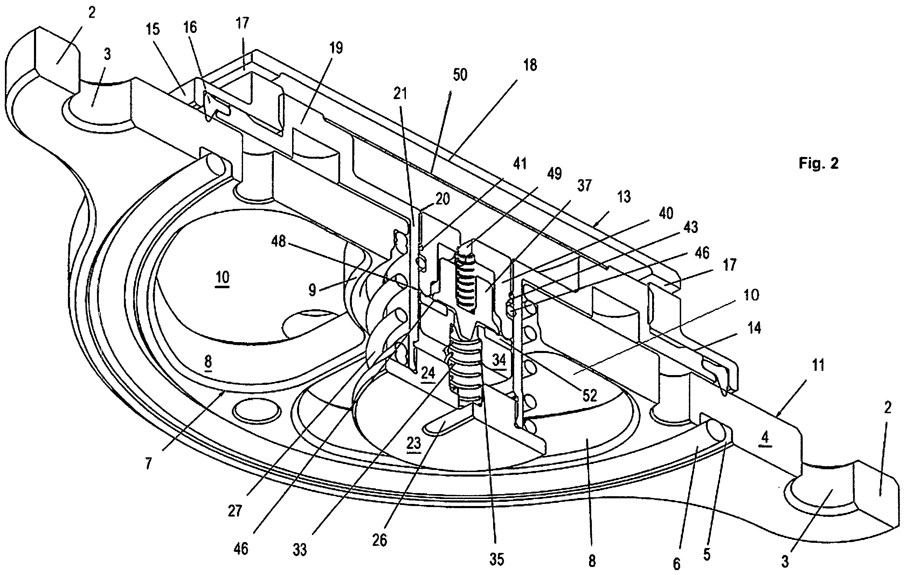

Der Belüftungskolben 37 ist in einer Führungshülse 40 geführt, die vom Halteteil 19 axial absteht und in den Führungsteil 21 ragt. Die Führungshülse 40 ist an ihrer Außenseite mit einer umlaufenden Ringnut 41 versehen, in der ein Dichtring 42, vorzugsweise ein O-Ring, liegt, mit dem die zylindrische Führungshülse 40 an der Innenwand des Führungsteiles 21 abgedichtet anliegt. Die Führungshülse 40 ist an ihrem dem Entlüftungskolben 34 zugewandten Ende mit einer innenseitigen Erweiterung 43 (s. a Fig. 2) versehen. Im Bereich dieser Erweiterung 43 liegt die Führungshülse 40 an der Innenwand des Führungsteiles 21 an.

Der Belüftungskolben 37 hat an seiner Kolbenfläche 44 einen kegelförmigen Vorsprung 45, der sich in Richtung auf den Entlüftungskolben 34 verjüngt und in die den Entlüftungskolben 34 axial durchsetzende Öffnung 35 ragt. In jeder Stellung des Belüftungskolbens 37 wird relativ zum Entlüftungskolben 34 zwischen dem kegelförmigen Vorsprung 45 und der Wandung der Durchgangsöffnung 35 ein Ringspalt ausgebildet, durch den ein Ausströmen eines gasförmigen Mediums in noch zu beschreibender Weise möglich ist. Je weiter der Belüftungskolben 37 aus der Ausgangsstellung gemäß den Fig. 1 bis 3 gegenüber dem Entlüftungskolben 34 verschoben wird, desto größer ist der Ringspalt zwischen dem Vorsprung 45 und der Wandung der Öffnung 35.

Der Belüftungskolben 37 hat am Umfang seiner Kolbenfläche 44 einen axial über diese überstehenden Dichtring 46, der in der Ausgangstellung unter der Kraft der Druckfeder 39 an einer Dichtscheibe 52 dichtend anliegt, die auf der Stirnseite des Entlüftungskolbens 34 befestigt ist. Die Dichtscheibe 52 ist so ausgebildet, dass ihre Außenseite bündig mit der Stirnseite des Entlüftungskolbens 34 liegt. Der Dichtring 46 ist so gestaltet, dass die Kolbenfläche 44 geringen Abstand von der Stirnseite des Entlüftungskolbens 34 hat, wenn der Dichtring 46 an der Dichtscheibe 52 anliegt.

Die Druckfedern 27, 33, 39 sind koaxial zueinander angeordnet, wobei die beiden Druckfedern 33, 39 gleichachsig übereinander liegen. Die Druckfedern sind so eingestellt, dass mit dem Druckausgleichselement die Belüftung, die Entlüftung und die Notentlüftung vorgenommen werden können. Die Druckfern 27, 33, 39 ermöglichen es, das Druckausgleichselement optimal auf den vorgesehenen Einsatzfall einzustellen.

Die Druckfedern 33, 39 sind mit Abstand von der Druckfeder 27 umgeben und vorteilhaft weitgehend innerhalb dieser Druckfeder 27 angeordnet. Durch diese verschachtelte Bauweise, die besonders in Fig. 3 erkennbar ist, ergibt sich eine kompakte Ausbildung des Druckausgleichselementes ohne Beeinträchtigung seiner Funktionalität.

In der in den **Fig. 1 bis 3** dargestellten Ausgangsstellung wird der Deckel 13 durch die Druckfeder 27 gegen den Träger 1 gezogen, so dass der Dichtring 16 unter elastischer Verformung auf dem Grundkörper 4 des Trägers 1 aufliegt.

Der Entlüftungskolben 34 und der Belüftungskolben 37 werden durch die Druckfedern 33 und 39 so gegeneinander axial belastet, dass sie aneinander liegen. Der Dichtring 46 liegt auf der Dichtscheibe 52 des Entlüftungskolbens 34 auf, wobei der Vorsprung 45 in die Öffnung 35 des Entlüftungskolbens 34 eintaucht. Die Führungshülse 40 ist am freien Ende als Dichtring 22 ausgebildet, der in der Ausgangsstellung gemäß den Fig. 1 bis 3 dichtend an der Dichtscheibe 52 anliegt. Der Dichtring 22 und der Dichtring 46 des Belüftungskolbens 37 sind vorteilhafter Weise jeweils mit einer umlaufenden Dichtkante 22a, 46a (nicht dargestellt) versehen, wodurch eine hohe Kontaktpressung ermöglicht wird. In der Ausgangsstellung liegen beide Dichtringe 22, 46 bzw. die umlaufenden Dichtkanten 22a, 46a an der Dichtscheibe 52 an und bilden jeweils eine axiale Abdichtung. Die Dichtscheibe 52 ist vorteilhaft eine Weichdichtung, welche vorzugweise aus thermoplastischem Elastomer oder einem anderen flexiblen Kunststoffmaterial besteht.

In der Ausgangsstellung ist in einem vorbestimmten Druckbereich keine Be- und Entlüftungsfunktion möglich, beispielsweise in einem Druckbereich zwischen -120 mbar und 80 mbar, insbesondere zwischen -40 mbar und 15 mbar.

Im Bereich unterhalb des Abschlussteiles 18 sitzt auf dem Halteteil 19 eine luftdurchlässige Membran 50, die im Strömungsweg vom Behälterinneren aus vor den Auslassöffnungen 17 vorgesehen ist. Die luftdurchlässige Membran 50 ermöglicht den Druckausgleich bei der Be- und Entlüftung. Die Membran 50 ist längs ihres Randes auf einer Auflagefläche 51 des Halteteiles 19 befestigt, beispielsweise aufgeklebt oder angeschweißt, und liegt mit Abstand oberhalb der Führungshülse 40. Gleichzeitig verhindert die Membran 50 den Eintrag von Wasser bis zu einer definierten Wassersäule. Der Luftdurchsatz und die Wassersäule sind über die Art und/oder Ausbildung der Membran 50 einstellbar. Zudem kann der gewünschte Volumenstrom des gasförmigen Mediums bzw. der Luft über die Geometrie der Ventilelemente bzw. des Entlüftungskolbens 34 und/oder des Belüftungskolbens 37, sowohl für die Belüftungs- als auch die Entlüftungsfunktion getrennt eingestellt werden.

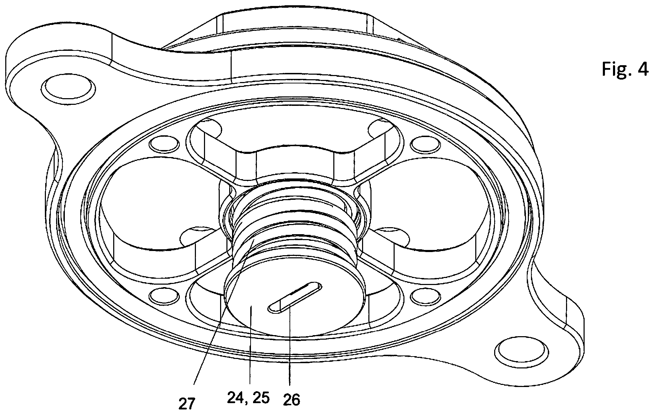

Die **Fig. 4 bis 6** zeigen das Druckausgleichselement in Belüftungsstellung. Der Druck außerhalb des Behälters ist größer als der Druck innerhalb des Behälters. Die Kraft, die auf den Entlüftungskolben 34 und den Belüftungskolben 37 wirkt, ist größer als die Kraft der Druckfeder 33. Das gasförmige Umgebungsmedium wirkt über die Auslassöffnungen 17 und die Öffnung 49 der Führungshülse 40 auf den Belüftungskolben 37, der den Entlüftungskolben 34 gegen die Kraft der Druckfeder 32 so weit verschiebt, bis dieser an einem Axialanschlag 53 zur Anlage kommt. Der Axialanschlag 53 ist beispielhaft ein in die Innenwand des Führungsteiles 21 eingesetzter Sicherungsring. Der Axialanschlag 53 kann auch durch andere geeignete konstruktive Maßnahmen am Führungsteil 21 vorgesehen werden.

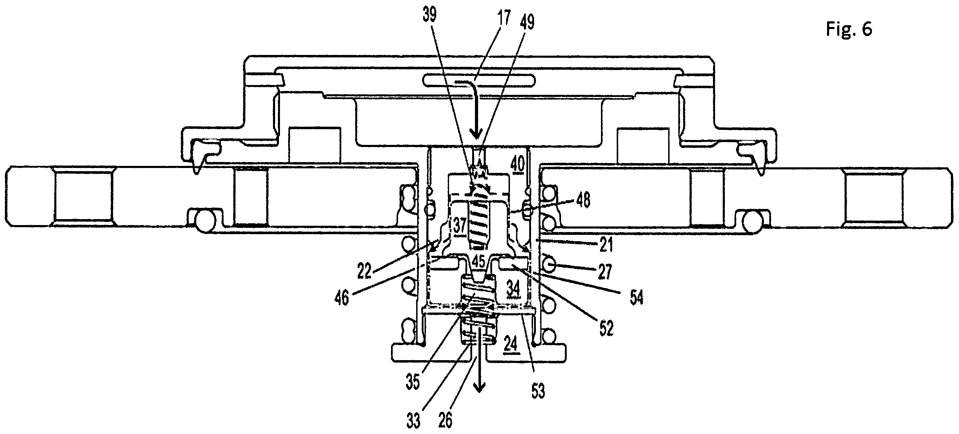

Der Belüftungskolben 37 wird innerhalb der Führungshülse 40 axial so weit verschoben, dass sich der Dichtring 46 des Belüftungskolbens 37 außerhalb der Führungshülse 40 befindet und weiterhin dichtend an der Dichtscheibe 52 anliegt. Der Dichtring 22 der Führungshülse 40 hat Abstand von der Dichtscheibe 52. Das Umgebungsmedium strömt durch die Auslassöffnungen 17 und die Membran 50 in den Ringspalt 48 zwischen der Führungshülse 40 und dem Belüftungskolben 37 und gelangt in einen Ringraum 54 zwischen dem Führungsteil 21 und dem Entlüftungskolben 34. Von hier aus kann das Umgebungsmedium unterhalb des Entlüftungskolbens 34 in die Öffnung 26 des Verschlussteiles 24 in das Behälterinnere strömen. Der beschriebene Strömungsweg ist in Fig. 6 durch die Strömungspfeile gekennzeichnet. Wie bereits erwähnt, kann der gewünschte Volumenstrom des gasförmigen Mediums bzw. der Luft über die Geometrie der Ventilelemente bzw. des Entlüftungskolbens 34 und/oder des Belüftungskolbens 37 sowohl für die Belüftungs- als auch die Entlüftungsfunktion getrennt eingestellt werden.

Da der Entlüftungskolben 34 verschoben wird, hebt die Dichtscheibe 52 des Entlüftungskolbens 34 vom Dichtring 46 der Führungshülse 40 ab, so dass die axiale Dichtstelle zwischen dem Dichtring 46 und der Dichtscheibe 52 geöffnet wird, so dass die Luft von der Umgebung in der beschriebenen Weise in den Behälter strömen kann.

Sobald die von der Luft auf den Belüftungskolben 37 wirkende Druckkraft kleiner ist als die von der Druckfeder 33 ausgeübte Federkraft, werden beide Kolben 34, 37 zurück in die in den Fig. 1 bis 3 dargestellte Ausgangslage verschoben. Dann liegt der Dichtring 22 des Führungsteiles 21 wieder dichtend an der Dichtscheibe 52 des Entlüftungskolbens 34 an.

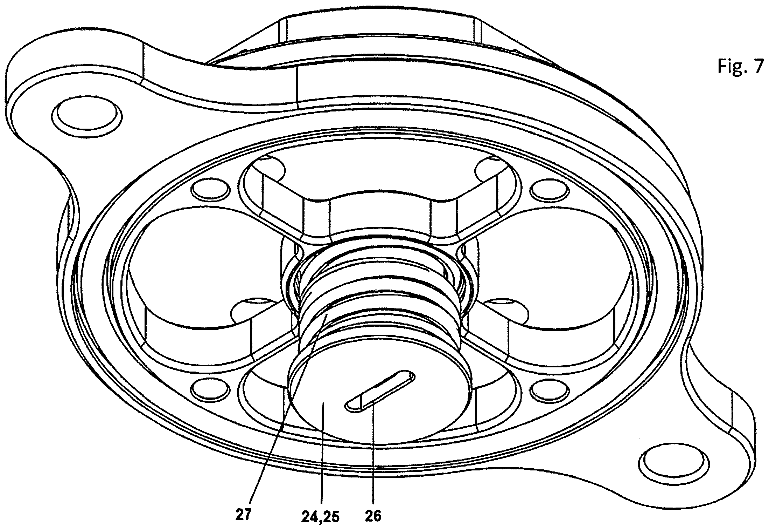

Anhand der **Fig. 7 bis 9** wird die Entlüftungsstellung des Druckausgleichselementes beschrieben. Diese Entlüftungsstellung wird dann erreicht, wenn der Druck innerhalb des Behälters größer ist als der Druck außerhalb. Dieser erhöhte Druck wirkt über die Öffnung 26 des Verschlussteiles 24 und die Öffnung 35 des Entlüftungskolbens 34 auf die Kolbenfläche 44 des Belüftungskolbens 37. Dadurch wird der Belüftungskolben 37 gegen die Kraft der Druckfeder 39 in den Führungsteil 40 verschoben. Der Dichtring 46 des Belüftungskolbens 37 hebt von der Dichtscheibe 52 des Entlüftungskolbens 34 ab, so dass die axiale Dichtstelle zwischen dem Entlüftungskolben 34 und dem Belüftungskolben 37 geöffnet wird. Somit kann das gasförmige Medium aus dem Inneren des Behälters über die geöffnete Dichtstelle und den Ringspalt 48 zwischen dem Belüftungskolben 37 und der Führungshülse 40 zur Öffnung 39 und von dort durch die Membran 50 zu den Auslassöffnungen 17 strömen, über welche das gasförmige Medium das Druckausgleichselement verlässt.

Die axiale Dichtstelle zwischen der Führungshülse 40 und der Dichtscheibe 52 des Entlüftungskolbens 34 bleibt aufrechterhalten.

Sobald der Druck im Behälter kleiner ist als die von der Druckfeder 39 ausgeübte Druckkraft, wird der Belüftungskolben 37 zurückgeschoben, bis der Dichtring 46 dichtend an der Dichtscheibe 52 anliegt.

Die den Entlüftungskoben 34 axial belastende Druckfeder 33 ist so eingestellt, dass sie größer ist als die von der Druckfeder 39 auf den Belüftungskolben 37 wirkende Kraft. Dadurch bleibt der Entlüftungskoben 34 in der beschriebenen Entlüftungsstellung in Anlage an der Führungshülse 40.

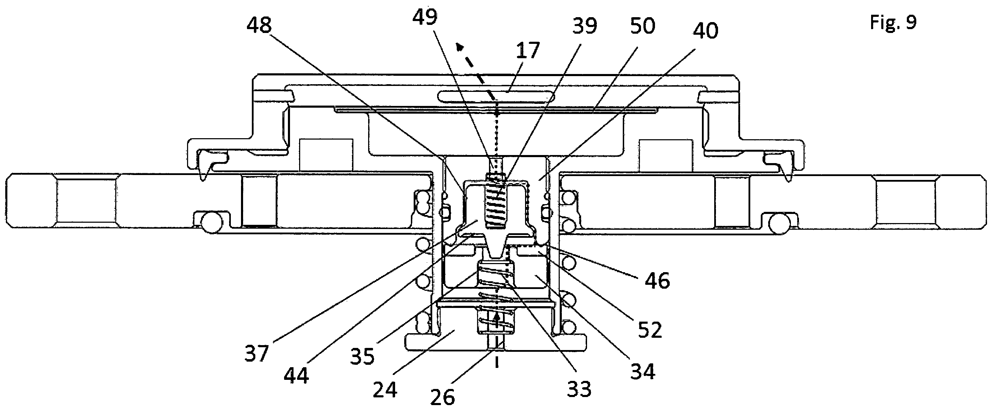

In Fig. 9 ist der Strömungsverlauf durch die eingezeichneten Strömungspfeile verdeutlicht.

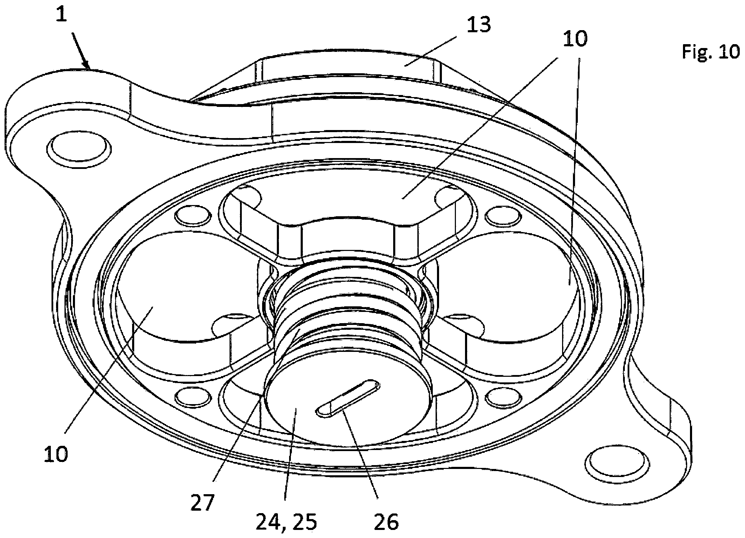

Die **Fig. 10 bis 12** zeigen den Fall einer Notentlüftung.

Sie ist dann erforderlich, wenn der Druck im Behälter so hoch wird, dass eine Beschädigung des Behälters zu befürchten ist. In diesem Falle sorgt die Notentlüftungsstellung des Druckausgleichselementes dafür, dass dieser hohe Druck augenblicklich abgebaut werden kann und sich ein möglicher heißer Massenstrom des gasförmigen Mediums sich nicht im Behälter aufstaut. Hierzu wird der Deckel 13 zusammen mit der Membran 50 vom Träger 1 abgehoben. Die Druckkraft des gasförmigen Mediums im Behälter ist hierbei größer als die Kraft der Druckfeder 27, mit welcher der Deckel 13 gegen den Träger 1 gezogen wird.

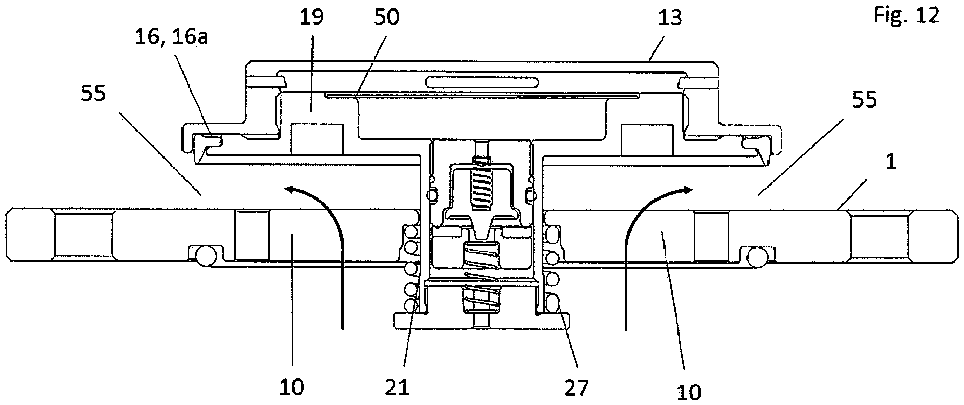

Das gasförmige Medium im Behälter wirkt über die Öffnungen 10 des Trägers 1 unmittelbar auf den Deckel 13 bzw. seinen Halteteil 19, wodurch der Deckel 13 vom Träger 1 abgehoben wird. Der Dichtring 16 des Deckels 13 gibt somit einen großen Öffnungsquerschnitt 55 (s. a. Fig. 12) frei, so dass das gasförmige Medium unter Umgehung der Kolben 34, 37 unmittelbar in die Umgebung außerhalb des Behälters gelangen kann. Der Öffnungsquerschnitt 55 entspricht vorteilhafterweise annähernd dem gesamten Öffnungsquerschnitt im Gehäuse, wobei die Öffnung zur Aufnahme des Druckausgleichselementes vorgesehen ist. Vorzugweise umfasst der Öffnungsquerschnitt 55 eine durchströmbare Ringfläche von etwa 500 mm² bis 5000 mm². In Fig. 12 sind die entsprechenden Strömungspfeile eingezeichnet.

Sobald der hohe Druck im Behälter abgebaut ist, wird der Deckel 13 durch die Druckfeder 27 wieder in seine Ausgangsstellung gemäß den Fig. 1 bis 3 zurückgeführt, in welcher der Dichtring 16 in der beschriebenen Weise dichtend am Grundkörper 4 des Trägers 1 anliegt. Der Führungsteil 21 des Trägers 13 wird zusammen mit den Kolben 34, 37 verschoben.

Die Druckfedern 27, 33, 39 sind so aufeinander abgestimmt, dass die Einzelteile des Druckausgleichselementes in der beschriebenen Weise relativ zueinander verstellt werden, um die Belüftungs-, Entlüftungs- und Notentlüftungs-Position zu erreichen.

Die Ausführungsform gemäß den **Fig. 13 bis 24** ist im Wesentlichen gleich ausgebildet wie das Ausführungsbeispiel nach den Fig. 1 bis 12. Das Druckausgleichselement kann ebenfalls eine Ausgangstellung, eine Belüftungsstellung, eine Entlüftungsstellung sowie eine Notentlüftungsstellung einnehmen.

Der Träger 1 ist gleich ausgebildet wie bei der vorigen Ausführungsform, so dass auf die dortige Beschreibung verwiesen werden kann. Der Träger 1 hat den ringförmigen Grundkörper 4, auf dem der Dichtring 16 mit einer Dichtlippe 16a unter elastischer Verformung in der Ausgangsstellung dichtend aufliegt.

Der zylindrische Führungsteil 21 des Halteteiles 19 weist an seiner Innenwand eine Ringnut 56 auf, in der ein Dichtring 57 untergebracht ist. Er bildet eine radiale Dichtung, die einen Doppelkolben 58 gegenüber dem Führungsteil 21 abdichtet. Der Doppelkolben 58 kann als zwei Ventilelemente angesehen werden, die einstückig miteinander ausgebildet sind.

Im Führungsteil 21 ist der Doppelkolben 58 als Ventilelement verschiebbar gelagert, der an seinen beiden einander gegenüberliegenden Kolbenflächen 59, 60 jeweils eine zentrale Vertiefung 61, 62 aufweist, in die die Druckfedern 33, 39 eingreifen. Die Druckfeder 33 ist am Verschlusselement 23 entsprechend der vorigen Ausführungsform axial abgestützt. Die gegenüberliegende Druckfeder 39 greift in eine Vertiefung 63 eines Abstützteiles 64 ein, der Bestandteil des Halteteiles 19 des Deckels 13 ist. Die Druckfeder 39 wird am Abstützteil 64 axial abgestützt.

Wie bei der vorigen Ausführungsform liegen die beiden Druckfedern 33, 39 achsgleich zueinander sowie koaxial zur Druckfeder 27, mit welcher der Deckel 13 in der beschriebenen Weise gegen den Träger 1 gedrückt bzw. gezogen wird.

In die Vertiefung 63 des Abstützteiles 64 mündet eine zentrale Öffnung 65, über die das gasförmige Medium aus dem Behälter an die Umgebung oder aus der Umgebung in den Behälter gelangen kann.

Wie bereits erwähnt, kann auch hier der gewünschte Volumenstrom des gasförmigen Mediums bzw. der Luft über die Geometrie der Ventilelemente bzw. des Doppelkolbens 58 sowohl für die Belüftungs- als auch die Entlüftungsfunktion getrennt eingestellt werden.

Die **Fig. 13 bis 15** zeigen das Druckausgleichselement in der Ausgangsstellung, in der der Doppelkoben 58 so innerhalb des Führungsteiles 21 angeordnet ist, dass der Dichtring 57 den Durchtritt der Luft zu den Auslassöffnungen 17 des Deckels 13 sperrt. Wie bei der ersten Ausführungsform ist in einem bestimmten Druckbereich keine Be- und Entlüftung vorgesehen. Dieser Druckbereich liegt beispielhaft zwischen -120 mbar und +80 mbar, insbesondere zwischen etwa -40 mbar und etwa +15 mbar.

In der Ausgangsstellung gemäß den Fig. 13 bis 15 wird der Doppelkolben 58 durch die beiden Druckfedern 33, 39 in einer Ausgangslage gehalten, in welcher der Dichtring 57 den Doppelkolben 58 gegenüber dem Führungsteil 21 abdichtet.

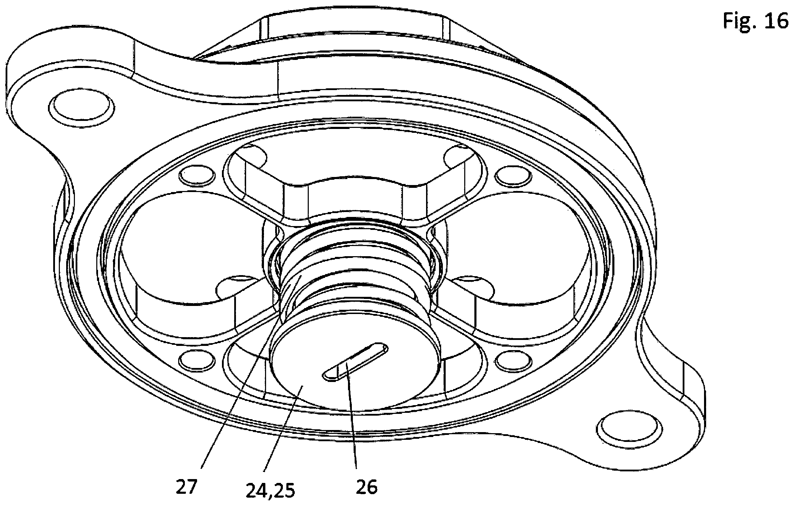

Die **Fig. 16 bis 18** zeigen das Druckausgleichselement in der Belüftungsstellung. In diesem Falle ist der Druck außerhalb des Behälters höher als der Druck innerhalb des Behälters. Die Kraft der Druckfeder 33 ist so eingestellt, dass sie in diesem Falle kleiner ist als die auf die Kolbenfläche 60 wirkende Druckkraft. Die Umgebungsluft strömt durch die Auslassöffnungen 17 des Deckels 13 und durch die Membran 50 in die Öffnung 65 des Abstützteiles 64 zum Doppelkolben 58. Er wird innerhalb des Führungsteiles 21 axial so weit verschoben, bis er an der Stirnseite des Verschlussteiles 24 zur Anlage kommt.

Der Doppelkolben 58 ist an seiner Kolbenfläche 60 mit einer Strömungsnut 66 versehen, die mit einer in der Mantelfläche 67 des Doppelkolbens 58 vorgesehenen Strömungsnut 68 strömungsverbunden ist. Beispielhaft ist die Strömungsnut 66 hier als eine Ringnut ausgebildet.

An der gegenüberliegenden Kolbenfläche 59 des Doppelkolbens 58 ist eine weitere Strömungsnut 69 vorgesehen, in welche die in der Mantelfläche 67 befindliche Strömungsnut 68 mündet. Auch die weiteren, hier gut erkennbaren Strömungsnuten 68, 69 sind beispielhaft als Ringnuten ausgebildet.

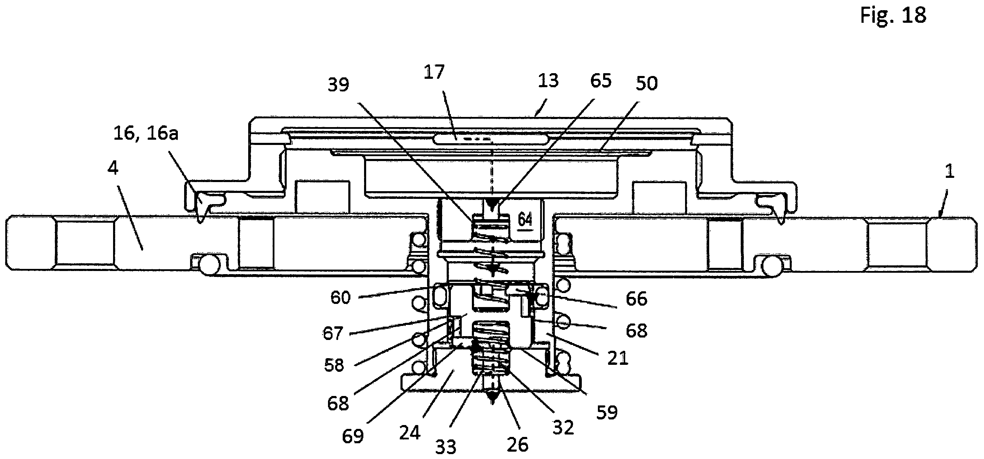

Wie die Strömungspfeile in Fig. 18 zeigen, kann in der Belüftungsstellung die Außenluft durch die Auslassöffnungen 17 in das Druckausgleichselement gelangen und dann axial durch den Abstützteil 64 zum Doppelkolben 58 strömen. Über die Ringnuten 66 bis 68 gelangt die Luft in die zentrale Vertiefung 32 und von dort durch die Öffnung 26 des Verschlussteiles 24 in das Behälterinnere. Sobald der Druck abnimmt, wird der Doppelkolben 58 durch die Druckfeder 33 wieder zurück in die Ausgangsstellung gemäß den Fig. 13 bis 15 geschoben.

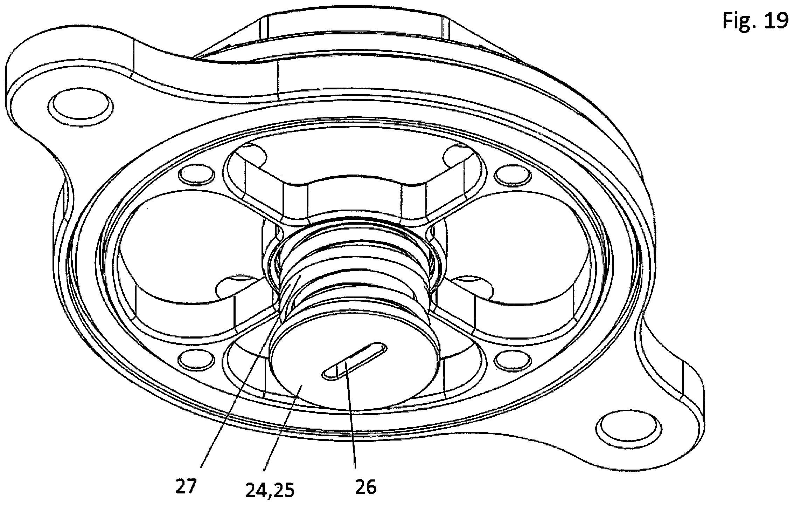

In den **Fig. 19 bis 21** ist die Entlüftungsstellung des Druckausgleichselementes abgebildet. Die Entlüftungsstellung wird dann erreicht, wenn der Druck innerhalb des Behälters größer ist als der Druck außerhalb. Die Druckfeder 39 ist so eingestellt, dass bei einem vorgegebenen Innendruck die auf den Doppelkolben 58 wirkende Druckkraft größer ist als die Kraft der Druckfeder 39. Dadurch wird der Doppelkolben 58 gegen die Kraft der Druckfeder 39 soweit axial im Führungsteil 21 verschoben, bis der Doppelkolben 58 an der Stirnseite des Abstützteiles 64 zur Anlage kommt.

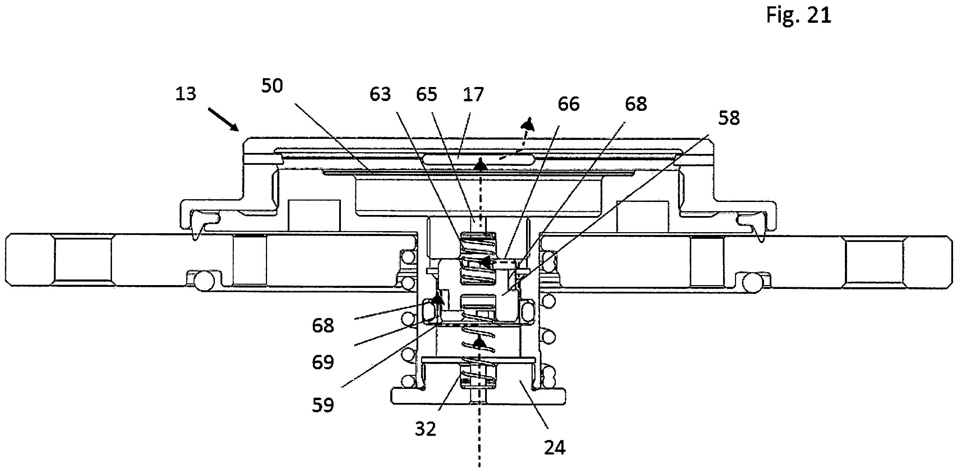

Das gasförmige Medium im Behälterinneren gelangt durch die Öffnung 26 und die Vertiefung 32 im Verschlussteil 24 zur Kolbenfläche 59 des Doppelkolbens 58. Über die Strömungsnuten 66, 68 und 69 kann die Luft in die Vertiefung 63 und durch die Öffnung 65 des Abstützteiles 64 strömen. Über die luftdurchlässige Membran 50 tritt die Luft dann durch die Auslassöffnungen 17 des Deckels 13 in die Umgebung außerhalb des Behälters. Der Strömungsverlauf ist in Fig. 21 durch die entsprechenden Strömungspfeile gekennzeichnet.

Sobald der Druckabbau im Behälter erfolgt ist, drückt die Druckfeder 39 den Doppelkolben 58 wieder in die Ausgangsstellung gemäß den Fig. 13 bis 15 zurück.

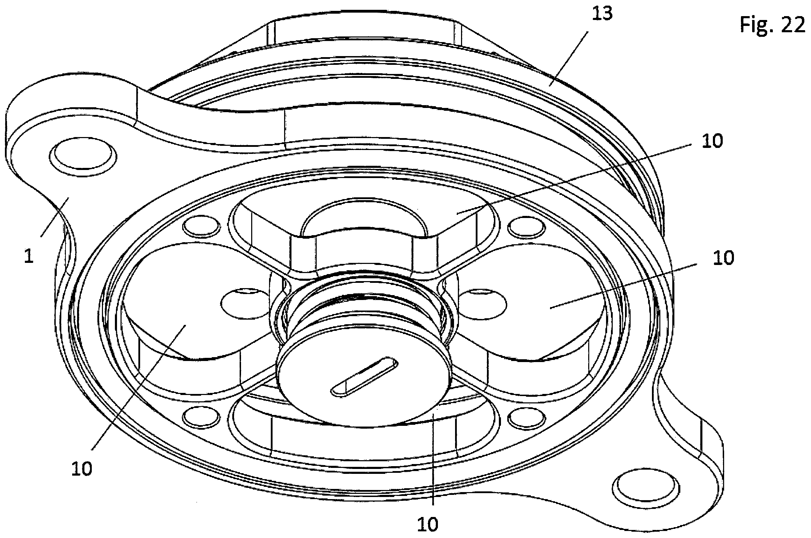

Im Falle der Notentlüftung wird der Deckel 13 in der anhand der Fig. 10 bis 12 beschriebenen Weise vom Träger 1 abgehoben, hier Fig. 22 bis 24. Der im Behälterinneren wirkende Überdruck wirkt über die Öffnungen 10 des Trägers 1 unmittelbar auf den Halteteil 19 des Deckels 13. Die den Führungsteil 21 umgebende Druckfeder 27 ist so eingestellt, dass im Falle der Notentlüftung der Druck des gasförmigen Mediums im Behälterinneren größer ist als die von der Druckfeder 27 ausgeübte Druckkraft. Dadurch wird der Deckel 13 unter Überwindung der Kraft der Druckfeder 27 vom Träger 1 in der beschriebenen Weise abgehoben, wodurch der große Öffnungsquerschnitt 55 zwischen dem Deckel 13 und dem Träger 1 freigeben wird. Das gasförmige Medium kann somit sehr schnell über diesen großen Querschnitt 55 in die Umgebung außerhalb des Behälters gelangen. Vorzugsweise ist die Notentlüftung ab einem Innendruck im Behälter bei mehr als 20 mbar aktiviert, Alternativ auch bei 40 mbar, prinzipiell frei einstellbar und tauglich bis 500 mbar.

Sobald der Überdruck abgebaut worden ist, wird der Deckel 13 durch die Druckfeder 27 wieder gegen den Träger 1 gezogen, wobei der Dichtring 16 unter elastischer Verformung auf dem Grundkörper 4 des Trägers 1 aufliegt und den Durchgang zwischen dem Deckel 13 und dem Träger 1 verhindert.

Da das Medium im Notentlüftungsfall nicht durch den Doppelkolben 58 strömt, ist ein rascher und schlagartiger Abbau des Überdruckes im Gehäuseinneren sichergestellt.

## Patentansprüche

1. **Druckausgleichselement** für Behälter, vorzugsweise für Batteriegehäuse von Fahrzeugen, mit einem Gehäuse (1, 13), das wenigstens einen Einlass (26) und wenigstens einen Auslass (17) für ein gasförmiges Medium, vorzugsweise Luft, aufweist, und mit einem Ventilelement (34, 37, 58), das im Strömungsweg des gasförmigen Mediums vom Einlass (26) zum Auslass (17) liegt,
**dadurch gekennzeichnet, dass** ein zweites Ventilelement (34, 37, 58) im Strömungsweg des gasförmigen Mediums vom Einlass (26) zum Auslass (17) vorgesehen ist, und dass beide Ventilelemente (34, 37, 58) gegeneinander mit unterschiedlicher Kraft druckbelastet sind, wobei die Druckkräfte so vorgesehen sind, dass zumindest das eine Ventilelement in eine Belüftungsstellung und zumindest das andere Ventilelement in eine Entlüftungsstellung verstellbar sind.

2. Druckausgleichselement nach Anspruch 1,
**dadurch gekennzeichnet, dass** die beiden Ventilelemente (34, 37, 58) jeweils unter der Kraft wenigstens einer Druckfeder (33, 39) stehen, wobei die Druckfedern (33, 39) vorteilhaft gleichachsig zueinander liegen.

3. Druckausgleichselement nach Anspruch 1 oder 2,
**dadurch gekennzeichnet, dass** die beiden vorteilhaft koaxial zueinander angeordneten Ventilelemente (34, 37, 58) in einem Führungsteil (21) verschiebbar untergebracht sind.

4. Druckausgleichselement nach einem der Ansprüche 1 bis 3,
**dadurch gekennzeichnet, dass** das Gehäuse durch einen vorteilhaft mit dem Führungsteil (21) versehenen Deckel (13) und einen Träger (1) gebildet ist.

5. Druckausgleichselement nach einem der Ansprüche 1 bis 4,
**dadurch gekennzeichnet, dass** der Führungsteil (21) sich durch den Träger (1) erstreckt.

6. Druckausgleichselement nach Anspruch 4 oder 5,
**dadurch gekennzeichnet, dass** der Deckel (13) durch eine Zugkraft gegen den Träger (1) gezogen wird.

7. Druckausgleichselement nach Anspruch 6,
**dadurch gekennzeichnet, dass** zur Erzielung der Zugkraft eine Druckfeder (27) vorgesehen ist, die sich an der vom Deckel (13) abgewandten Seite am Führungsteil (21) und am Träger (1) axial abstützt.

8. Druckausgleichselement nach einem der Ansprüche 4 bis 7,
**dadurch gekennzeichnet, dass** der Deckel (13) unter Zwischenlage wenigstens einer Dichtung (16), vorzugsweise eines Dichtringes, dichtend am Träger (1) anliegt.

9. Druckausgleichselement nach einem der Ansprüche 2 bis 8,
**dadurch gekennzeichnet, dass** die Druckfedern (27, 33, 39) koaxial zueinander angeordnet sind.

10. Druckausgleichselement nach einem der Ansprüche 2 bis 9,
**dadurch gekennzeichnet, dass** die Druckfeder (27) für den Deckel (13) die Druckfedern (33, 39) für die beiden Ventilelemente (34, 37) mit Abstand umgibt.

11. Druckausgleichselement nach einem der Ansprüche 1 bis 10,
**dadurch gekennzeichnet, dass** die beiden vorteilhaft durch einen einstückigen Doppelkolben (58) gebildeten Ventilelemente (34, 37) in der Entlüftungsstellung einen solchen axialen Abstand voneinander haben, dass ein Durchlass für das gasförmige Medium vom Inneren des Behälters in die Umgebung geschaffen wird.

12. Druckausgleichselement nach einem der Ansprüche 1 bis 11,
**dadurch gekennzeichnet, dass** in der Belüftungsstellung das dem Behälter benachbarte Ventilelement (34) gegen einen Anschlag (53) gegen die auf ihn wirkende Druckkraft verschoben ist und einen Zugang des gasförmigen Mediums von außen in den Behälter ermöglicht.

13. Druckausgleichselement nach einem der Ansprüche 1 bis 12,
**dadurch gekennzeichnet, dass** der Träger (1) wenigstens einen Durchlass (10) aufweist, über den der Druck des gasförmigen Mediums im Behälter auf den Deckel (13) des Gehäuses wirkt.

14. Druckausgleichselement nach Anspruch 13,
**dadurch gekennzeichnet, dass** bei Überschreiten eines vorgegebenen Druckes im Behälter der Deckel (13) gegen die Kraft der ihn belastenden Druckfeder (27) vom Träger (1) abhebt und einen Auslass (55) freigibt, der durch den Abstand zwischen dem Träger (1) und dem Deckel (13) bestimmt ist.

15. Druckausgleichselement nach einem der vorhergehenden Ansprüche,
**dadurch gekennzeichnet, dass** der Volumenstrom des gasförmigen Mediums über die Geometrie der Ventilelemente (34, 37, 58) sowohl für die Belüftungs- als auch die Entlüftungsfunktion getrennt einstellbar ist.
